# EUROPÄISCHE PATENTSCHRIFT

(11) **EP 2 491 353 B1**
(45) Veröffentlichungstag und Bekanntmachung des Hinweises auf die Patenterteilung: **10.10.2018**
(21) Anmeldenummer: 10742840.1
(22) Anmeldetag: 17.08.2010
(51) Int. Cl.: G01F 1/69, G01F 1/684, G01P 13/04, G01F 1/72

(54) **VERFAHREN ZUR ERFASSUNG DER DURCHFLUSSRATE UND STRÖMUNGSRICHTUNG EINES FLUIDS, UND THERMISCHES DURCHFLUSSMESSGERÄT**
METHOD FOR DETECTING THE FLOW RATE AND FLOW DIRECTION OF A FLUID, AND THERMAL-TYPE FLOW METER
PROCÉDÉ DE MESURE DU DÉBIT ET DE LA DIRECTION D'ÉCOULEMENT D'UN FLUIDE, ET DÉBITMÈTRE DU TYPE THERMIQUE

(30) Priorität: 23.10.2009 DE 102009045956
(43) Veröffentlichungstag der Anmeldung: 29.08.2012
(73) Patentinhaber: Endress+Hauser Flowtec AG, 4153 Reinach (CH)
(72) Erfinder: PFAU, Axel, 4147 Aesch (CH); KUMAR, Vivek, CH-4132 Muttenz (CH); BADARLIS, Anastasios, CH-4127 Birsfelden (CH)
(74) Vertreter: Andres, Angelika Maria
(86) Internationale Anmeldenummer: PCT/EP2010/061948
(87) Internationale Veröffentlichungsnummer: WO 2011/047898

(56) Entgegenhaltungen:
- DE-A1- 19 819 855
- DE-A1-102007 023 840
- DE-C1- 19 618 520
- DE-U1- 20 103 966
- US-A- 5 817 932
- US-A1- 2004 031 331
- US-B1- 6 170 327

## Beschreibung

Die vorliegende Erfindung betrifft ein Verfahren zur Erfassung des Durchflusses und der Strömungsrichtung eines Messmediums in einem Messrohr und einem thermischen Durchflussmessgerät zur Durchführung des Verfahrens, mit einem ersten beheizbaren Widerstandsthermometer und zumindest einem zweiten beheizbaren Widerstandsthermometer.

Herkömmliche thermische Durchflussmessgeräte verwenden üblicherweise zwei möglichst gleichartig ausgestaltete Temperatursensoren, die in, meist stiftförmigen, Metällhülsen, sog. Stingers, angeordnet sind und die in thermischem Kontakt mit dem durch ein Messrohr oder durch die Rohrleitung strömenden Medium sind. Für die industrielle Anwendung sind beide Temperatursensoren üblicherweise in ein Messrohr eingebaut; die Temperatursensoren können aber auch direkt in der Rohrleitung montiert sein. Einer der beiden Temperatursensoren ist ein sog. aktiver Temperatursensor, der mittels einer Heizeinheit beheizt wird. Als Heizeinheit ist entweder eine zusätzliche Widerstandsheizung vorgesehen, oder bei dem Temperatursensor selbst handelt es sich um ein Widerstandselement, z.B. um einen RTD-(Resistance Temperature Device) Sensor, der durch Umsetzung einer elektrischen Leistung, z.B. durch eine entsprechende Variation des Messstroms erwärmt wird. Bei dem zweiten Temperatursensor handelt es sich um einen sog passiven Temperatursensor: Er misst die Temperatur des Mediums.

Die DE 198 19 855 A1 offenbart einen Luftmassensensor zur Bestimmung der Menge einer strömenden Luftmasse. Diese Luftmassensensoren insbesondere in Brennkraftmaschinen eingesetzt. Der beschriebene Luftmassensensor weist ein erstes und ein zweites Widerstandsthermometer auf. Diese Druckschrift offenbart zudem eine Methode zur Erkennung der Strömungsrichtung unter Definierung eines Totbereichs welcher durch vordefinierte Spannungswerte begrenzt wird.

Auch der aus DE 10 2007 023 840 A1 bekannte thermische Durchflussmesser ist zur Erkennung der Strömungsrichtung ausgelegt.

Die US 5,817,932 A offenbart einen Luftströmungsdetektor. Die US 2004/0031331 A1 offenbart eine Injektionsvorrichtung zur Injektion eines Fluidnebels in einen Luftstrom. Sie beschreibt eine Anordnung mehrerer Temperatursensoren 12, 14, 16 und strömungsführender Körper 19, 20. Die Anordnung ist zur Bestimmung des Durchflusses und der Strömungsrichtung ausgelegt.

Die DE 201 03 966 U1 offenbart einen Atemstromsensor mit einem Luftwiderstandskörper 6. Auch dieser Durchflusssensor ist zur Erkennung der Strömungsrichtung ausgelegt.

Die US 6 170 327 B1 offenbart einen Luftmassenströmungsdetektor, welcher bei Schmutzablagerungen auf der Sensoroberfläche in der Lage ist, diesen Messfehler auszugleichen.
Üblicherweise wird in einem thermischen Durchflussmessgerät der beheizbare Temperatursensor so beheizt, dass sich eine feste Temperaturdifferenz zwischen den beiden Temperatursensoren einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Temperatursensors wesentlich von dem Massedurchfluss des vorbeiströmenden Mediums abhängig. Da das Medium kälter ist als der beheizte Temperatursensor, wird durch das vorbeiströmende Medium Wärme von dem beheizten Temperatursensor abtransportiert. Um also bei einem strömenden Medium die feste Temperaturdifferenz zwischen den beiden Temperatursensoren aufrecht zu erhalten, ist eine erhöhte Heizleistung für den beheizten Temperatursensor erforderlich. Die erhöhte Heizleistung ist ein Maß für den Massedurchfluss bzw den Massestrom des Mediums durch die Rohrleitung.

Wird hingegen eine konstante Heizleistung eingespeist, so verringert sich infolge des Durchflusses des Mediums die Temperaturdifferenz zwischen den beiden Temperatursensoren. Die jeweilige Temperaturdifferenz ist dann ein Maß für den Massedurchfluss des Mediums durch die Rohrleitung bzw. durch das Messrohr.

Es besteht somit ein funktionaler Zusammenhang zwischen der zum Beheizen des Temperatursensors notwendigen Heizenergie und dem Massedurchfluss durch eine Rohrleitung bzw. durch ein Messrohr. Die Abhängigkeit des sog. Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung ,t-switch', t-trend' oder 't-mass' angeboten und vertrieben.

Bisher wurden hauptsächlich RTD-Elemente mit wendelförmig gewickelten Platindrähten in thermischen Durchflussmessgeräten eingesetzt. Bei Dünnfilm-Widerstandsthermometern (TFRTDs) wird herkömmlicherweise eine mäanderförmige Platinschicht auf ein Substrat aufgedampft. Darüber wird eine weitere Glasschicht zum Schutz der Platinschicht aufgebracht. Der Querschnitt der Dünnfilm-Widerstandsthermometer ist im Unterschied zu den, einen runden Querschnitt aufweisenden, RTD-Elementen, rechteckig. Die Wärmeübertragung in das Widerstandselement und/oder aus dem Widerstandselement erfolgt demnach über zwei gegenüberliegende Oberflächen, welche zusammen einen Großteil der Gesamtoberfläche eines Dünnfilm-Widerstandsthermometers ausmachen.

Die Patentschriften EP 0 024 327 und US 4,083,244 zeigen verschiedene. Ausgestaltungen von thermischen Durchflussmessgeräten, welche auch die Strömungsrichtung ermitteln können. Dazu sind strömungskonditionierende Körper in der Strömung vor einem Temperatursensor angeordnet.

Die Aufgabe der Erfindung besteht darin, ein thermisches Durchflussmessgerät bereit zu stellen, mit welchem die Strömungsrichtung des Messmediums einfach ermittelbar ist.

Die Aufgabe wird gelöst durch ein Verfahren zur Erfassung des Durchflusses und der Strömungsrichtung eines Messmediums in einem Messrohr, mit einem ersten beheizbaren Widerstandsthermometer und zumindest einem zweiten beheizbaren Widerstandsthermometer, wobei zumindest zu einem ersten Zeitpunkt und zu einem weiteren, zweiten Zeitpunkt, insbesondere aber zu den Zeitpunkten t=t₀, t₁, t₂, t₃,.. tₙ, mit n einer natürlichen Zahl, die Messmediumstemperatur T_{Medium;Ist}(t) gemessen wird, wobei eine erste momentane Heizleistung P_{1,1}(t₁) zu einem ersten Zeitpunkt vom ersten beheizbaren Widerstandsthermometer aufgenommen wird, wobei eine zweite Heizleistung P_{2,2}(t₂) zu einem zweiten Zeitpunkt vom zweiten beheizbaren Widerstandsthermometer aufgenommen wird,
wobei das erste beheizbare Widerstandsthermometer einen ersten Temperaturmesswert T_{1,beheizt;ist}(t=t₁) zum ersten Zeitpunkt bereitstellt und ein, den Durchfluss des Messmediums durch das Messrohr repräsentierender erster Koeffizient PC₁(t₁) in Abhängigkeit von der vom ersten Widerstandsthermometer aufgenommenen Heizleistung P_{1,1}(t₁), von der Temperatur des Messmediums T_{Medium;ist}(t₁) und von der Temperatur des ersten beheizbaren
Widerstandsthermometers T_{1,beheizt;ist}(t₁) errechnet wird, wobei das zweite beheizbare Widerstandsthermometer einen zweiten Messwert der Temperatur T_{2,beheizt;Ist}(t₂) zum zweiten Zeitpunkt t₂ bereitstellt und ein zweiter Koeffizient PC₂(t₂) in Abhängigkeit von der vom zweiten Widerstandsthermometer aufgenommenen Heizleistung P_{2.2}(t₂), von der Temperatur des Messmediums T_{Medium;ist}(t₂) und von der Temperatur des zweiten beheizbaren Widerstandsthermometers T_{2,beheizt;ist}(t₂) errechnet wird, und wobei ein Entscheidungskoeffizient in Abhängigkeit vom ersten Koeffizienten PC₁(t₁) und vom zweiten Koeffizienten PC₂(t₂) errechnet wird, wobei der Wert des Entscheidungskoeffizienten eine Strömung des Messmediums im Messrohr in einer erste Strömungsrichtung, insbesondere parallel zur Messrohrachse, angibt, wenn der Wert des Entscheidungskoeffizienten über einem vorher festgelegten Grenzwert liegt und wobei der Wert des Entscheidungskoeffizienten eine Strömung des Messmediums im Messrohr in eine zweite Strömungsrichtung angibt, wenn der Wert des Entscheidungskoeffizienten unter dem vorher festgelegten Grenzwert liegt, wobei die zweite Strömungsrichtung entgegen der ersten Strömungsrichtung zeigt.

Die Durchführung des Verfahrens erfolgt erfindungsgemäß durch ein thermisches Durchflussmessgerät zur Bestimmung und/oder Überwachung des Durchflusses eines Messmediums durch ein Messrohr mit einer Regel-/Auswerteeinheit, einem ersten Sensor und zumindest einem weiteren, zweiten Sensor, welche Sensoren zumindest teilweise im Messrohr angeordnet sind, wobei der erste Sensor ein erstes beheizbares Widerstandsthermometer, beispielsweise in einer ersten stiftförmigen Hülse, aufweist, und wobei der zweite Sensor ein zweites beheizbares Widerstandsthermometer, z.B. in einer zweiten stiftförmigen Hülse, aufweist, wobei das thermische Durchflussmessgerät einen strömungsführenden Körper aufweist, welcher im Messrohr mit dem zweiten beheizbaren Widerstandsthermometer in einer gedachten Linie im Wesentlichen parallel zur Messrohrachse angeordnet ist, wobei das erste beheizbare Widerstandsthermometer beabstandet zum zweiten beheizbaren Widerstandsthermometer, insbesondere von einer vom strömungsführenden Körper ungestörten Strömung angströmbar im Messrohr angeordnet ist, insbesondere weist der strömungsführende Körper eine Ausdehnung längs einer Längsachse und eine Ausdehnung längs einer Hochachse auf, wobei der strömungsführende Körper so im Messrohr angeordnet ist, dass der Schnittpunkt der Längsachse und der Hochachse in der gedachten Linie zwischen der strömungsführendem Körper und zweitem Sensor liegt, wobei die Regel-/Auswerteeinheit und der zweite Sensor so ausgestaltet sind, insbesondere so beschaltet sind, dass das zweite Widerstandsthermometer zu einem bestimmten Zeitpunkt, insbesondere während, am Ende oder kurz nach einer Heizperiode, eine festgelegte Heizleistung aufnimmt und/oder dass am zweiten Widerstandsthermometer eine festgelegte Spannung abfällt bzw. an diesem angelegt ist. Diese ist unabhängig von der Temperatur des Messmediums bemessen. Die Heizleistung ist nach P=U²/R abhängig von der am Widerstandsthermometer angelegten bzw abgefallenen Spannung U und dem Widerstand des Widerstandsthermometers R, welcher seinerseits abhängig von seiner aktuellen Temperatur ist, welche wiederum abhängig von der Messmediumstemperatur und deren zeitlichen Verlauf ist.

In einer ersten Weiterbildung der Erfindung wird vorgeschlagen dass der erste, den Durchfluss des Messmediums durch das Messrohr repräsentierende Koeffizient PC₁(t₁) zum ersten Zeitpunkt t₁ nach der Formel PC₁(t₁)= P_{1.1}(t₁)/(T_{1,behelzt;ist}(t=t₁)-T_{Medium;ist}(t=t₁)) errechnet wird, und dass der, den Durchfluss des Messmediums durch das Messrohr repräsentierende Koeffizient PC₂(t₂) zum zweiten Zeitpunkt t₂ nach der Formel PC₂(t₂)=P_{2.2}(t₂)/(T_{2.beheizt;ist}(t=t₂)-T_{Medium;ist}(t=t₂)) errechnet wird, und wobei der Entscheidungskoeffizint nach der Formel DC=(PC₁-PC₂)/PC₁ in Prozent [%] errechnet wird.

In einer weiteren Weiterbildung der Erfindung wird vorgeschlagen, dass der Messwert der Temperatur des Messmediums T_{Medium;ist}(t₁) zum ersten Zeitpunkt vom zweiten beheizbaren Widerstandsthermometer bereitgestellt wird und/oder dass der Messwert der Temperatur des Messmediums T_{Medium;ist}(t₂) zum zweiten Zeitpunkt vom ersten beheizbaren Widerstandsthermometer bereitgestellt wird. Einer weiteren Weiterbildung gemäß wird der Messwert der Temperatur des Messmediums T_{Medium;Ist}(t) zum ersten und zweiten Zeitpunkt und/oder allen Zeitpunkten t von einem weiteren, dritten Temperatursensor, insbesondere von einem dritten Widerstandsthermometer, bereitgestellt.

Dementsprechend können der erste Zeitpunkt und der zweite Zeitpunkt voneinander verschieden sein oder gleich sein.

Je nach Ausgestaltung des thermischen Durchflussmessgeräts ist der Grenzwert des Entscheidungskoeffizienten zur Entscheidung ob eine Strömung in die erste Richtung oder in die zweite Richtung im Messrohr vorherrscht gleich Null oder er liegt in einem Bereich zwischen 29% und 48%.

Der erste Koeffizient PC₁ wird zur Durchflussbestimmung herangezogen, wobei der zweite Koeffizient PC₂ lediglich zur Bestimmung der Strömungsrichtung benutzt wird. Dadurch ist es möglich, nur den ersten Sensor zu kalibrieren. Von ihm wird üblicherweise eine geregelte Heizleistung aufgenommen. Es wird beispielsweise eine Soll-Temperaturdifferenz zwischen der Temperatur des beheizten ersten Sensors und der Temperatur des Messmediums eingestellt. Am zweiten Sensor hingegen wird beispielsweise ein vorher festgelegte Spannung angelegt. Er ist ungeregelt. Nach der Formel für die elektrische Momentanleistung P(t)=U²(t)/R(t) ist die Heizleistung abhängig von der am Widerstandsthermometer angelegten bzw. abgefallenen Spannung und dem Widerstand des Widerstandsthermometers, der seinerseits wiederum eine Funktion seiner Temperatur ist. Es ist also sowohl möglich eine festgelegte Heizleistung, wie auch eine festgelegte Spannung einzustellen. Eine Kalibrierung des erfindungsgemäßen Messgeräts ist somit auch nur in eine Strömungsrichtung nötig, da die Absolutwerte in die andere Strömungsrichtung gleich sind. Ob es nun eine am Widerstandsthermometer abgefallene oder eine an den Widerstandsthermometer angelegte Spannung handelt, hängt von der Beschaltung ab.

Des Weiteren wird die erfindungsgemäße Aufgabe gelöst durch ein thermisches Durchflussmessgerät zur Bestimmung und/oder Überwachung des Durchflusses eines Messmediums durch ein Messrohr zur Durchführung des Verfahrens nach einem der Ansprüche 1 bis 8, mit einer Regel-/Auswerteeinheit, einem ersten Sensor und zumindest einem weiteren, zweiten Sensor, welche Sensoren zumindest teilweise im Messrohr angeordnet sind, wobei der erste Sensor ein erstes beheizbares Widerstandsthermometer, beispielsweise in einer ersten stiftförmigen Hülse, aufweist, und wobei der zweite Sensor ein zweites beheizbares Widerstandsthermometer, z.B. in einer zweiten stiftförmigen Hülse, aufweist, wobei das thermische Durchflussmessgerät einen strömungsführenden Körper aufweist, welcher im Messrohr mit dem zweiten beheizbaren Widerstandsthermometer in einer gedachten Linie im Wesentlichen parallel zur Messrohrachse angeordnet ist, wobei das erste beheizbare Widerstandsthermometer beabstandet zum zweiten beheizbaren Widerstandsthermometer, insbesondere von einer vom strömungsführenden Körper ungestörten Strömung angströmbar im Messrohr angeordnet ist, insbesondere weist der strömungsführende Körper eine Ausdehnung längs einer Längsachse und eine. Ausdehnung längs einer Hochachse auf, wobei der strömungsführende Körper so im Messrohr angeordnet ist, dass der Schnittpunkt der Längsachse und der Hochachse in der gedachten Linie zwischen der strömungsführendem Körper und zweitem Sensor liegt, wobei die Regel-/Auswerteeinheit und der zweite Sensor so ausgestaltet sind, insbesondere so beschaltet sind, dass das zweite Widerstandsthermometer zu einem bestimmten Zeitpunkt, insbesondere während, am Ende oder kurz nach einer Heizperiode, eine festgelegte Heizleistung aufnimmt und/oder dass am zweiten Widerstandsthermometer eine festgelegte Spannung abfällt bzw. an diesem angelegt ist. Diese ist unabhängig von der Temperatur des Messmediums bemessen. Die Heizleistung ist nach P=U²/R abhängig von der am Widerstandsthermometer angelegten bzw. abgefallenen Spannung U und dem Widerstand des Widerstandsthermometers R, welcher seinerseits abhängig von seiner aktuellen Temperatur ist, welche wiederum abhängig von der Messmediumstemperatur und deren zeitlichen Verlauf ist.

Ist der der strömungsführende Körper eine Platte, so liegt gemäß einem Beispiel der Schnittpunkt der Längsachse und der Hochachse im Plattenschwerpunkt und die Hochachse und die Längsachse der Platte stehen senkrecht zur Messrohrachse.

In einer weiteren Weiterbildung weist das thermische Durchflussmessgerät einen dritten Sensor zur Messung der Temperatur des Messmediums auf. Der dritte Sensor weist z.B. ein drittes Widerstandsthermometer in einer dritten stiftförmigen Hülse auf, wobei auch beim ersten Sensor das erste Widerstandsthermometer in einer ersten stiftförmigen Hülse angeordnet ist und wobei auch beim zweiten Sensor das zweite Widerstandsthermometer in einer zweiten stiftförmigen Hülse (9) angeordnet ist und der erste Sensor und der zweite Sensor und der dritte Sensor sind parallel zueinander und/oder parallel zur Hochachse des strömungsführenden Körpers im Messrohr angeordnet, d.h. also dass die erste stiftförmige Hülse des ersten Sensors und die zweite stiftförmige Hülse des zweiten Sensors und die dritte stiftförmige Hülse des dritten Sensors parallel zueinander und/oder parallel zur Hochachse des strömungsführenden Körpers im Messrohr angeordnet sind, insbesondere ist der dritte Sensor auch außerhalb der vom strömungsführenden Körper beeinflussten Strömung des Messmediums im Messrohr angeordnet, beispielsweise neben der Platte, so dass die Längsachse der Platte den dritten und/oder den ersten Sensor schneidet.

Das erfindungsgemäße thermische Durchflussmessgerät wird insbesondere in der industriellen Prozessmesstechnik verwendet, um beispielsweise Gase und/oder Flüssigkeiten zu messen. Dabei werden oft Vorgaben zur Leistungsbegrenzung, zum Beispiel zum Explosionsschutz getroffen und können eingehalten werden.

Die Erfindung wird anhand der nachfolgenden Figuren näher erläutert, in denen jeweils ein Ausführungsbeispiel dargestellt ist. Gleiche Elemente sind in den Figuren mit gleichen Bezugszeichen versehen.
- Fig. 1: zeigt ein erstes erfindungsgemäßes thermisches Durchflussmessgerät im Schnitt,
- Fig. 2: zeigt den zu Fig.1 gehörigen Verlauf des Entscheidungskoeffizienten in Abhängigkeit von der Reynoldszahl,
- Fig. 3: zeigt ein weiteres erfindungsgemäßes thermisches Durchflussmessgerät im Schnitt,
- Fig. 4: zeigt den zur Ausgestaltung in Fig.3 gehörenden Verlauf des Entscheidungskoeffizienten in Abhängigkeit von der Reynoldszahl,
- Fig. 5: zeigt ein weiteres erfindungsgemäßes thermisches Durchflussmessgerät,
- Fig. 6: zeigt den zur Ausgestaltung in Fig.5 gehörenden Verlauf des Entscheidungskoeffizienten in Abhängigkeit von der Reynoldszahl.

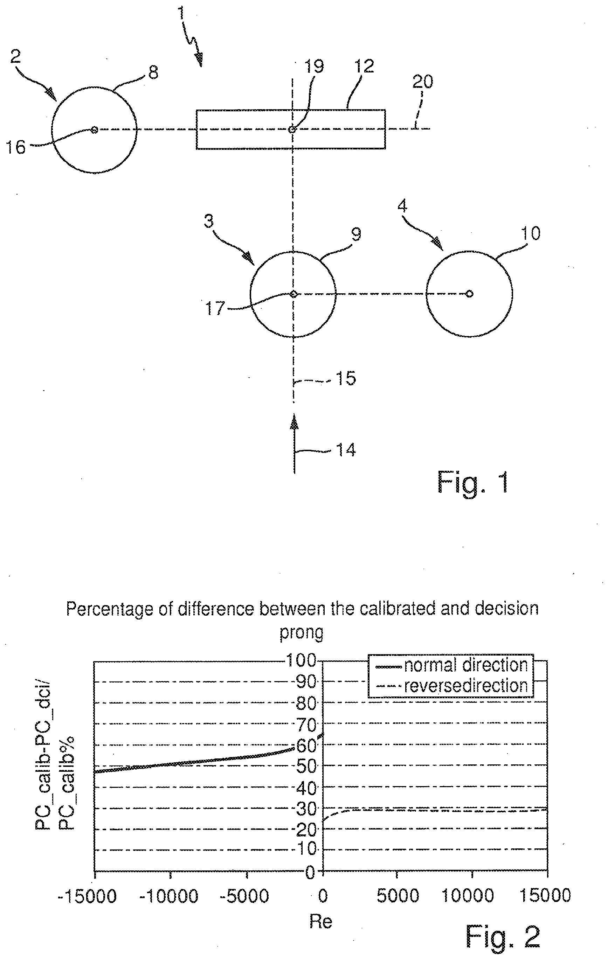

In Fig. 1 ist eine erste Ausgestaltungsform eines erfindungsgemäßen thermischen Durchflussmessgeräts 1 gezeigt. Ein erster beheizbarer Sensor 2 ist neben einer Platte 12 als strömungsführendem Körper angebracht. Der Sensor weist ein nicht gezeichnetes erstes Widerstandsthermometer in einer ersten Hülse 8 auf. Die Mittelachse 16 der ersten Hülse 8 liegt hier demnach näherungsweise in der Längsachse 20 der Platte 12. Die Hochachse 19 der Platte ist im Wesentlichen Parallel zur den Mittelachsen der drei Sensoren.

Der zweite Sensor 3, respektive die hier gezeichnete zweite Hülse 9 des zweiten Sensors 3, ist in einer Linie mit der Platte 12 im Messrohr angeordnet. Die Hochachse 19 der Platte 12, sowie die Mittelachse 17 des zweiten Sensors 3 schneiden die Messrohrachse 15. Somit liegt der erste Sensor 2 in einer von der Platte 12 unbeeinflussten Strömung des Messmediums im Messrohr. Hingegen ist der zweite Sensor 3 im Lee der Platte 12 platziert, falls das Messmedium in einer zweiten Richtung, entgegengesetzt zu der in der Figur einbeschriebenen ersten Strömungsrichtung 14, strömt. Strömt das Messmedium in die Richtung des präsentierten Pfeils der ersten Strömungsrichtung 14, ist auch der zweite Sensor 3 ungestört angeströmt. Dadurch ergeben sich die Unterschiede in den Koeffizienten zwischen den beiden Strömungsrichtungen, wie deutlich offenbart wird.

Der zweite Sensor 3 dient hier aber nicht zur Durchflussmessung, sondern trägt lediglich zur Bestimmung der Strömungsrichtung bei. Daher ist der zweite Sensor 3 auch als ungeregelter Sensor zu betrachten. Um die Koeffizienten der ersten beiden Sensoren 2, 3 gleichzeitig zu berechnen, ist ein dritter Sensor 4 vorgesehen, der als unbeheizter Sensor ausgestaltet sein kann, da dieser die Aufgabe hat, den zum Zeitpunkt der Messung aktuellen Messwert der Temperatur des Messmediums bereit zu stellen. Der dritte Sensor 4, respektive die dritte Hülse 10, ist ebenfalls in einer nicht von der Platte 12 konditionierten Strömung des Messmediums im Messrohr angeordnet. Hier liegt der dritte Sensor 4 in einer Linie mit dem zweiten Sensor 3 parallel zur Längsachse 20 der Platte 12 bzw. senkrecht zur Messrohrachse 15. Der Abstand des dritten Sensors 4 senkrecht zur Messrohrachse 15 ist gleich groß bemessen, wie vom ersten Sensor 2 zur Messrohrachse 15. Hier in diesem Beispiel beträgt der Abstand senkrecht zur Längsachse 20 der Platte 12 das gleiche Maß wie der Abstand der zweiten Sensors 3. Dieser Abstand ist jedoch von der Anwendung abhängig und ist somit variabel.

Im gezeigten Ausführungsbeispiel sind die Hülsen baugleich, d.h. sie weisen in der Regel die gleiche Länge, die gleiche Wandstärke und insbesondere den gleichen Durchmesser auf, welcher z.B. zwischen 1 und 3mm, hier ca. 2mm beträgt. Der Abstand des zweiten und dritten Sensors 3, 4 zur Längsachse 20 der Platte 12 ist natürlich auch stark von der Dicke der Platte 12 abhängig und beträgt hier z.B. das ein bis dreifache des Durchmessers der Hülsen. Die Dicke der Platte selbst bewegt sich z.B. im Bereich zwischen dem halben Durchmesser und dem zweifachen des Durchmessers der Hülsen. Die Abstände der Sensoren, also des ersten und zweiten Sensors 2 und 3 und des zweiten und dritten Sensors 3 und 4 senkrecht zur Messrohrachse gemessen, sind hier im Wesentlichen als gleich groß anzusehen und betragen z.B. zwei bis zehnfache der Durchmesser der Hülsen. Auch diese Abstände sind direkt abhängig von den Plattenabmessungen, hier speziell der Ausdehnung der Platte 12 längs der Längsachse 20, welche hier z.B. das zwei bis sechsfache eines Hülsendurchmessers betragen kann. Die Ausdehnung der Platte 12 längs ihrer Hochachse 19 ist abgestimmt auf die Größe der verwendeten Widerstandsthermometer in den Sensoren. Sie kann auch gleich sein der Ausdehnung der Platte 12 längs ihrer Längsachse 20.

Die Platte 12 kann einen Druckverlust des Messmediums im Messrohr verursachen. Je nach Anwendung können deren Abmessungen also variieren und entsprechend angepasst bzw. optimiert werden. Vor allem die Ausdehnungen der Platte längs der Längs- 20 und längs der Hochachse 19 sind dafür prädestiniert.

Ein wesentlicher Unterschied zu den nachfolgend diskutierten Konzepten ist, dass der Grenzwert für die Strömungsrichtungs-Erkennung nicht Null ist, sondern zwischen 29% und 48% liegt.

In diesem Ausführungsbeispiel weist das thermische Durchflussmessgerät 1, wie beschrieben, drei Sensoren 2, 3, 4 auf, zwei beheizbare 2, 3 und einen Sensor 4 zur Bestimmung der Messmediumstemperatur. Allerdings ist ein erfindungsgemäßes Durchflussmessgerät 1 auch mit nur zwei Sensoren realisierbar. Diese übernehmen dann alternierend die Funktionen des beheizten und des unbeheizten Sensors, welcher die Messmediumstemperatur misst.

Für alle Ausgestaltungen sieht das Verfahren zum Betreiben eines erfindungsgemäßen thermischen Durchflussmessgeräts folgende Verfahrensschritte vor.

Ein erstes Widerstandsthermometer eines ersten Sensors wird während einer ersten Heizperiode aufgeheizt, ihm wird eine erste Heizenergiemenge zugeführt, und die vom ersten Widerstandsthermometer aufgenommene Heizleistung zu einem ersten Zeitpunkt bestimmt. Zusätzlich wird ein zweites Widerstandsthermometer eines zweiten Sensors während einer zweiten Heizperiode mit einer zweiten Heizenergiemenge aufgeheizt und die vom zweiten Widerstandsthermometer aufgenommene Heizleistung zu einem zweiten Zeitpunkt bestimmt, Sowohl zum ersten Zeitpunkt, wie auch zum zweiten Zeitpunkt liegt ein Messwert der Temperatur des Messmediums im Messrohr vor.

Dieser Messmediumstemperaturmesswert kann im alternierenden Betrieb zu dem ersten und zweiten Zeitpunkt vom jeweils unbeheizten Sensor gemessen werden, oder es ist ein weiterer Sensor zur Bestimmung der Messmediumstemperatur zum ersten und zweiten Zeitpunkt im Messmedium vorgesehen. Im ersten Fall ist der erste Zeitpunkt ungleich dem zweiten Zeitpunkt. Im zweiten Fall kann der zweite Zeitpunkt mit dem ersten Zeitpunkt zusammenfallen - die Heizleistungen des ersten und zweiten Sensors werden gleichzeitig bestimmt.

Die erste Heizleistung zum ersten Zeitpunkt wird in Relation gesetzt zur Differenz des Temperaturwerts des beheizten ersten Widerstandsthermometers zum ersten Zeitpunkt und des Messwerts der Temperatur des Messmediums zum ersten Zeitpunkt. Analog wird die Differenz der Temperatur des zweiten beheizten Widerstandsthermometers zum zweiten Zeitpunkt und der zum zweiten Zeitpunkt gemessenen Messmediumstemperatur gebildet, durch welche die Augblicksleistung des zweiten Widerstandsthermometers zum zweiten Zeitpunkt geteilt wird. Erhalten werden somit zwei Koeffizienten zu zwei Zeitpunkten, welche, wie oben ausgeführt, je nach Ausführung gleich oder voneinander verschieden sein können.

Ein wesentliches Merkmal dieses Verfahrens besteht nun darin, dass nur der erste Sensor zur Durchflussmessung herangezogen wird. Der erste Koeffizient ist ein den Durchfluss zum ersten Zeitpunkt widerspiegelnder Koeffizient. Die erste Heizleistung kann aus Explosionsschutzgründen begrenzt sein, z.B. auf 256mW. Natürlich ist dann auch die zweite Heizleistung entsprechend gedeckelt. Die erste Heizleistung wird geregelt. Üblicherweise wird eine Soll-Temperaturdifferenz zwischen beheiztem und unbeheiztem Widerstandsthermometer eingestellt, z.B. 10K. Sie ist aber nach P=U²/R, wobei U die am Widerstandsthermometer abfallende Spannung und R der Widerstand der Widerstandsthermometers ist, auch abhängig von den Widerständen der Widerstandsthermometer, welche ihrerseits wieder abhängig von der Temperatur sind. Die zweite Heizleistung ist dagegen ungeregelt in Bezug auf eine Soll-Temperaturdifferenz zwischen zweiten beheiztem Widerstandsthermometer und dem entsprechenden unbeheizten Widerstandsthermometer des ersten oder dritten Sensors. Beispielsweise durch eine vorher festgelegte Spannungs- oder Leistungsspitze einer bestimmten Größe.

Mittels der beiden nun berechneten Koeffizienten wird ein Entscheidungskoeffizient gebildet. Der erste Koeffizient wird vom zweiten Koeffizienten subtrahiert und durch den zweiten Koeffizienten geteilt. Natürlich ist auch die Subtraktion des zweiten vom ersten Koeffizienten möglich, wobei das Ergebnis dann durch den ersten Koeffizienten geteilt wird. Je nach Ausgestaltung des verwendeten erfindungsgemäßen thermischen Durchflussmessgeräts verschieben sich dann die Grenzwerte, wie der Fachmann weis.

Damit kann neben dem Volumen- und/oder Masse-Durchflusses auch die Strömungsrichtung eines Messmediums in einem Messrohr erfasst werden.

Fig. 2 zeigt den zu dem in Fig. 1 dargestellten thermischen Durchflussmessgerät zugehörigen Verlauf des Entscheidungskoeffizienten in Abhängigkeit von der Reynoldszahl. Eine Unterscheidung der beiden Strömungsrichtungen ist sehr deutlich zu treffen, da die Kurven für die erste und die zweite Strömungsrichtung in jedem Geschwindigkeitsbereich gut voneinander abgegrenzt sind. Vor allem bei sehr langsamer Strömung bietet dieser Aufbau einen verlässlichen Entscheidungskoeffizienten. Auch in dieser Ausgestaltung ist die Kalibrierung zur Durchflussmessung nur in eine Strömungsrichtung notwendig, da der erste beheizbare Sensor die gleichen Messwerte in beide Strömungsrichtungen bei sonst gleichen Strömungsbedingungen ausgibt. Durch die Geometrie der Fig. 1 bedingt, bewegt sich der Entscheidungskoeffizient zwischen 24% und 29% für Strömungen in der ersten Richtung und zwischen 48% und 65% für Strömungen in der zweiten Richtung. Es sollte also der Grenzwert für hohe Re-Zahlen ermittelt werden. Eine Bestimmung des Entscheidungskoeffizienten für alle Strömungsgeschwindigkeiten ist nicht nötig.

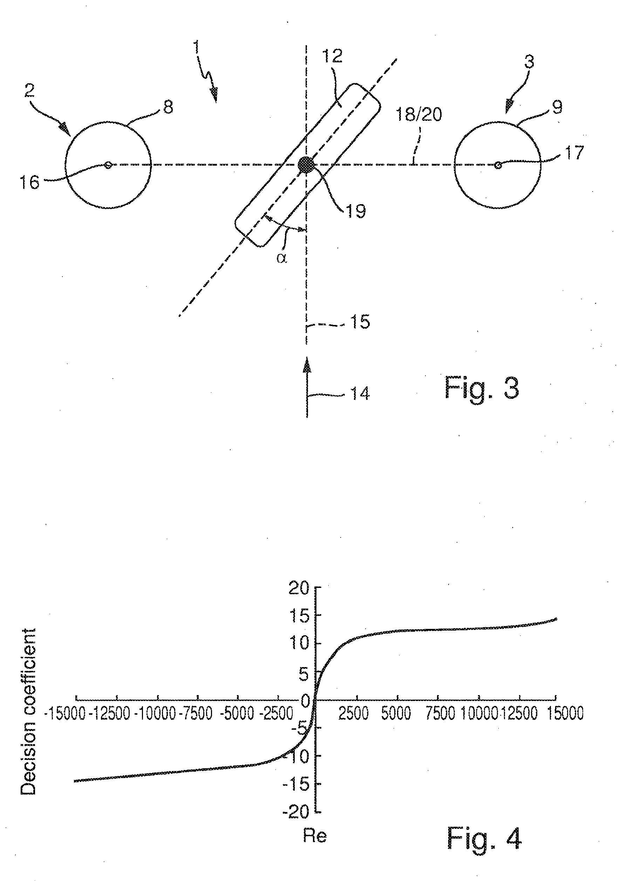

In der Fig. 3 ist ein erfindungsgemäßes thermisches Durchflussmessgerät 1 in der Draufsicht dargestellt. Vom ersten Sensor 2 und vom zweiten Sensor 3 des thermischen Durchflussmessgeräts 1 sind jeweils nur die erste Hülse 8 und die zweite Hülse 9 zu sehen. Der Schnitt verläuft in einer Ebene senkrecht zu den Mittelachsen der Hülsen 16, 17, welche daher nur als Punkte skizziert sind. Der Pfeil 14 zeigt die Strömungsrichtung des hier nicht dargestellten Messmediums im ebenfalls nicht dargestellten Messrohr. Der zu sehende Teil des thermischen Durchflussmessgeräts 1 befindet sich im montierten Zustand jedoch in einem Messrohr.

Zwischen den Hülsen 8 und 9 verläuft eine gedachte Verbindungslinie 18. Sie entspricht in diesem Beispiel der Verbindungslinie zwischen dem ersten und zweiten Widerstandsthermometer. Sie schneidet die Mittelachsen 16, 17 der Hülsen 8, 9 näherungsweise senkrecht. In der Mitte der Verbindungslinie 18, hier in einer Ebene, in welcher Ebene die Messrohrachse 15 liegt, und welche Ebene parallel zu den Mittelachsen 16, 17 der Hülsen 8, 9 verläuft, ist der Schnittpunkt der Hochachse 19 und der Längsachse 20 des strömungsführenden Körpers, hier der Platte 12. Da die Hochachse 19 in dieser Darstellung senkrecht geschnitten ist, und daher nur als Punkt zu erkennen ist, fällt hier die Darstellung der Hochachse 19 mit der Darstellung des Schnittpunkts der Hoch- und der Längsachse 19, 20 zusammen. Dieser ist hier gleichzeitig ein Symmetriepunkt. Die Platte 12 ist punktsymmetrisch zu diesem Schnittpunkt. Durch den symmetrischen Aufbau müssen die erfindungsgemäßen thermischen Durchflussmessgeräte 1 nur in eine Strömungsrichtung zur Durchflussmessung kalibriert werden. Der zweite beheizbare Widerstandsthermometer wird lediglich zur Strömungsrichtungserkennung benötigt. Die Platte 12 weist in diesem Beispiel einen Winkel α von ca. 45° zur Messrohrachse 15 und damit auch zur Verbindungslinie 18 zwischen den beiden Hülsen 8, 9 auf.

Die der Übersichtlichkeit wegen nicht gezeigten Widerstandsthermometer sind im Wesentlichen in den Endabschnitten bzw. Spitzen der Hülsen 8, 9 angeordnet, und die Platte 12 liegt zwischen den Widerstandsthermometern. Ein dritter Sensor, welcher die Temperatur des Messmediums bestimmt ist hier nicht gezeichnet. Dieser würde in einem Bereich des Messrohrs angeordnet werden, in welchem die Strömung des Messmediums nicht oder nicht mehr von der Platte 12 beeinflusst ist.

Das Konzept dieses thermischen Durchflussmessgeräts 1 basiert auf den lokalen Änderungen der Strömungsgeschwindigkeit des Messmediums im Messrohr um die beiden Sensoren 2, 3 und dem Vergleich der beiden Koeffizienten PC₁ und PC₂, wie bereits beschrieben, mit dem Entscheidungskoeffizienten DC=(PC₂ - PC₁)/PC_{2,} welcher die Strömungsrichtung angibt. Die Platte 12 teilt die Strömung lokal, so dass der erste Sensor 2 in einer hier verlangsamten Strömung angeordnet ist. Durch die Platte 12 liegen Staupunkte der Strömung an der Platte 12 auf der Seite des ersten Sensors 2. Der zweite Sensor 3 hingegen ist in der beschleunigten Strömung angeordnet. Die Platte 12 weist in diesem Beispiel an beiden Enden ihrer Ausdehnung entlang ihrer Längsachse 20, zwei runde Enden auf, welche helfen, die Strömung zu beschleunigen. Der Winkel α der Platte 12 kann bei einer sich ändernden Strömungsgeschwindigkeit des Messmediums im Messrohr verändert und an die Strömungsgeschwindigkeit angepasst werden.

Die Hülsen 8, 9 des ersten und des zweiten Sensors 2, 3 weisen hier in diesem Beispiel den gleichen Durchmesser auf. Der Abstand zwischen den beiden Mittelachsen 16, 17 der Hülsen beträgt hier ca. das 4,5-fache dieses Durchmessers und die Platte 12 weist eine Ausdehnung entlang ihrer Längsachse 20 von ca. dem 3-fachen und entlang ihrer Hochachse 19 von ca. dem 5-fachen dieses Durchmessers auf. Die Dicke der Platte 12, also dann ihre Ausdehnung senkrecht zu der Ebene, welche durch die Längs- und Hochachse 19, 20 aufgespannt wird, beträgt dann ungefähr das 0,5-fache des Durchmessers der Hülsen 8, 9. Die bereits erwähnten runden Enden der Platte 12 werden entsprechend von einem Radius der Größe 0.5 mm gebildet.

Fig. 4 stellt den Verlauf des Entscheidungskoeffizienten (DC) in Abhängigkeit von der Reynoldszahl (Re) dar, hier von Re=-15000 ... 15000 veranschaulicht. Der Grenzwert für die Entscheidung, ob eine Strömung in die in Fig. 3 gezeigte erste Richtung strömt oder ob die Strömung in die dazu entgegengesetzte Richtung strömt, ist 0. Bei langsamen Strömungen nähern sich die Werte für die entgegengesetzten Strömungsrichtungen einander an. Bei schnellen Strömungen liegen die Werte zur Entscheidung der Strömungsrichtung hingegen weit auseinander.

Somit weist auch das zweite Konzept z.B. eine Platte als strömungskonditionierendes Bauteil auf. Diese ist jedoch fest im Messrohr montierbar - ihr Winkel zur Messrohrachse ist, zumindest im aufgezeigten Beispiel, fest. In beiden Weiterbildungen sitzt, konstruktiv bedingt, ein beheizbarer Sensor auf einem anderen Potential der Strömung als der andere. Ein wesentlicher Unterschied zu den bisher skizzierten Konzepten ist in der nachfolgenden Weiterbildung der Erfindung die Messung der Stauströmungstemperatur.

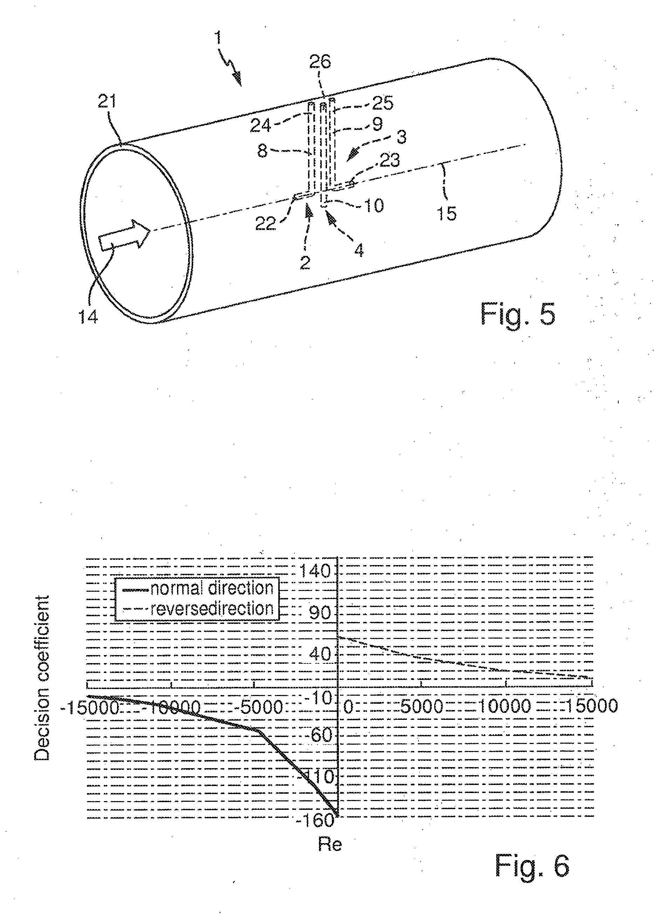

In Fig. 5 ist ein erfindungsgemäßes thermisches Durchflussmessgerät 1 dreidimensional dargestellt. Es weist drei Sensoren 2, 3, 4 in einem Messrohr 21 auf, wobei der erste Sensor 2 eine gebogene erste Hülse 8 und der zweite Sensor 3 eine gebogene zweite Hülse 9 aufweist. Der dritte Sensor 4 weist eine stiftförmige Hülse 10 auf, welche zwischen der ersten und der zweiten Hülse 8, 9 im Messrohr 21 angeordnet ist. Die hier nicht dargestellten Widerstandsthermometer sind in den Hülsen 8, 9, 10 meist mit sogenannten Wärmebrücken oder Distanzstücken zwischen Hülse und Widerstandsthermometer befestigt. Die Widerstandsthermometer des ersten und des zweiten Sensors 2, 3 sind erfindungsgemäß beheizbar ausgestaltet und sind in den jeweiligen Hülsenendabschnitten montiert. Die Hülsenschäfte 24, 25, 26 führen aus dem Messrohr 21 heraus und sind in einem der Übersichtlichkeit wegen nicht dargestellten Sensorhalter fixierbar. Der dritte Sensor 4 misst die Temperatur des Messmediums.

Zwischen den hier stiftförmigen Hülsenschäften 24, 25 und den Hülsenendabschnitten 22, 23 sind die Biegungen der Hülsen 8, 9 des ersten und zweiten Sensors 2, 3 lokalisiert. Diese weisen in diesem Beispiel jeweils einen Betrag von ca. 90° auf. Jedoch sind die Hülsen so im Messrohr 21 angeordnet, dass der erste Hülsenendabschnitt 22, oder deren Mittelachse, in eine erste Richtung zeigt, hier verläuft die Mittelachse des ersten Hülsenendabschnitts 22 parallel zur Messrohrachse 15 und zeigt entgegen der Strömungsrichtung 14, und der zweite Hülsenendabschnitt 23 ist entgegengesetzt dazu ausgerichtet. Würde der Betrag der Biegung nicht 90° sondern beispielsweise nur 60° betragen, würde der Hülsenendabschnitt nicht exakt parallel zur Messrohrachse verlaufen und daher auch nicht exakt entgegen der Strömungsrichtung stehen, sondern nur eine Richtungskomponente zeigt in die erste Richtung. Hier liegen die Mittelachsen der Hülsenendabschnitte 8, 9 näherungsweise in der Messrohrachse.

Das grundlegende Prinzip in dieser Ausgestaltung ist der Unterschied im Wärmefluss zwischen Staupunkt und Totwasser. Der erste Sensor wird direkt angeströmt, der zweite liegt im Lee. Der Wärmefluss ist im Staupunkt höher als im Lee und dadurch ist der den Durchfluss repräsentierende Koeffizient des ersten Sensors 2 höher als der des zweiten Sensors 3. Diese Anordnung der Sensoren ist symmetrisch zum Messrohr, was den Vorteil bietet, dass das erfindungsgemäße thermische Durchflussmessgerät 1 nur in eine der beiden genannten Richtungen kalibriert werden muss.

Der Verlauf des Entscheidungskoeffizienten in Abhängigkeit von der Reynoldszahl ist in Fig. 6 zu sehen. Je schneller die Strömungsgeschwindigkeit, desto Näher ist der Grenzwert dem Wert Null. Bei langsamen Strömungsgeschwindigkeiten ist die Differenzierung zwischen den Strömungsrichtungen klar abzulesen.

### Bezugszeichenliste

- 1: Thermisches Durchflussmessgerät
- 2: Erster Sensor
- 3: Zweiter Sensor
- 4: Dritter Sensor
- 5: Erstes Widerstandsthermometer
- 6: Zweites Widerstandsthermometer
- 7: Drittes Widerstandsthermometer
- 8: Erste Hülse
- 9: Zweite Hülse
- 10: Dritte Hülse
- 11: Sensorhalter
- 12: Platte
- 13: Kabel
- 14: Strömungsrichtung
- 15: Messrohrachse
- 16: Mittelachse der ersten Hülse
- 17: Mittelachse der zweiten Hülse
- 18: Verbindungslinie zwischen der Mittelachse der ersten Hülse und der Mittelachse der zweiten Hülse
- 19: Hochachse der Platte
- 20: Längsachse der Platte
- 21: Messrohr
- 22: Erster Hülsenendabschnitt
- 23: Zweiter Hülsenendabschnitt
- 24: Erster Hülsenschaft
- 25: Zweiter Hülsenschaft
- 26: Dritter Hülsenschaft
- 27: Erste Richtungskomponente
- 28: Dritte Richtungskomponente
- 29: Richtung, in welche der erste Hülsenendabschnitt zeigt

## Patentansprüche

1. Verfahren zur Erfassung des Durchflusses und der Strömungsrichtung eines Messmediums in einem Messrohr, mit einem thermischen Durchflussmessgerät (1) zur Bestimmung und/oder Überwachung des Durchflusses eines Messmediums durch ein Messrohr (21) mit einer Regel-/Auswerteeinheit, einem ersten Sensor (2) und zumindest einem zweiten Sensor (3), welche zumindest teilweise im Messrohr (21) angeordnet sind, wobei der erste Sensor (2) ein erstes beheizbares Widerstandsthermometer aufweist, und wobei der zweite Sensor (3) ein zweites beheizbares Widerstandsthermometer aufweist, und wobei das thermische Durchflussmessgerät (1) einen strömungsführenden Körper (12) aufweist, welcher im Messrohr (21) mit dem zweiten beheizbaren Widerstandsthermometer in einer Linie im Wesentlichen parallel zur Messrohrachse (15) angeordnet ist, wobei das erste beheizbare Widerstandsthermometer beabstandet zum zweiten Widerstandsthermometer im Messrohr angeordnet ist,
**dadurch gekennzeichnet, dass**
die Regel-/Auswerteeinheit und der zweite Sensor (3) so ausgestaltet sind, dass das zweite Widerstandsthermometer zu einem bestimmten Zeitpunkt eine festgelegte Heizleistung aufnimmt und/oder dass am zweiten Widerstandsthermometer zu einem bestimmten Zeitpunkt eine festgelegte Spannung abfällt,
wobei die Temperatur des Messmediums repräsentierende Messwerte T_{Medium;Ist}(t) zu den Zeitpunkten t=t₀, t₁, t₂, t₃,... tₙ gemessen werden,
wobei eine erste Heizleistung P_{1.1}(t₁) zum Zeitpunkt t₁ vom ersten beheizbaren Widerstandsthermometer aufgenommen wird,
wobei eine zweite Heizleistung P_{2.2}(t₂) zum Zeitpunkt t₂ vom zweiten beheizbaren Widerstandsthermometer aufgenommen wird,
wobei das erste beheizbare Widerstandsthermometer einen ersten Messwert der Temperatur T_{1.beheizt;Ist}(t₁) zum Zeitpunkt t₁ bereitstellt und ein, den Durchfluss des Messmediums durch das Messrohr repräsentierender erster Koeffizient PC₁(t₁) in Abhängigkeit von der vom ersten Widerstandsthermometer aufgenommenen Heizleistung P_{1.1}(t₁), von der Temperatur des Messmediums T_{Medium;ist}(t₁) und von der Temperatur des ersten beheizbaren Widerstandsthermometers T_{1,beheizt;ist}(t₁) errechnet wird, wobei das zweite beheizbare Widerstandsthermometer einen zweiten Messwert der Temperatur T_{2.beheizt;ist}(t₂) zum Zeitpunkt t₂ bereitstellt und ein zweiter Koeffizient PC₂(t₂) in Abhängigkeit von der vom zweiten Widerstandsthermometer aufgenommenen Heizleistung P_{2.2}(t₂), von der Temperatur des Messmediums T_{Medium;Ist}(t₂) und von der Temperatur des zweiten beheizbaren Widerstandsthermometers T_{2.beheizt;ist}(t₂) errechnet wird, und wobei ein Entscheidungskoeffizient in Abhängigkeit vom ersten Koeffizienten PC₁(t₁) und vom zweiten Koeffizienten PC₂(t₂) errechnet wird, wobei der Wert des Entscheidungskoeffizienten eine Strömung des Messmediums im Messrohr in einer erste Strömungsrichtung angibt, wenn der Wert des Entscheidungskoeffizienten über einem vorher festgelegten Grenzwert liegt und wobei der Wert des Entscheidungskoeffizienten eine Strömung des Messmediums im Messrohr in eine zweite Strömungsrichtung angibt, wenn der Wert des Entscheidungskoeffizienten unter dem vorher festgelegten Grenzwert liegt, wobei die zweite Strömungsrichtung entgegen der ersten Strömungsrichtung zeigt.

2. Verfahren nach Anspruch 1,
**dadurch gekennzeichnet,**
**dass** der erste, den Durchfluss des Messmediums durch das Messrohr repräsentierende Koeffizient PC₁(t₁) zum Zeitpunkt t₁ nach der Formel PC₁(t₁)= P_{1.1}(t₁)/(T_{1.beheizt;Ist}(t=t₁)-T_{Medium;ist}(t=t₁)) errechnet wird,
und **dass** der ,den Durchfluss des Messmediums durch das Messrohr repräsentierende Koeffizient PC₂(t₂) zum Zeitpunkt t₂ nach der Formel -PC₂(t₂)= P_{2.2}(t₂)/(T_{2.beheizt;ist}(t=t₂)-T_{Medium;Ist}(t=t₂)) errechnet wird,
und wobei der Entscheidungskoeffizient nach der Formel DC=(PC₁-PC₂)/PC₁ errechnet wird.

3. Verfahren nach Anspruch 1 oder 2,
**dadurch gekennzeichnet,**
**dass** der Messwert der Temperatur des Messmediums T_{Medium;ist}(t₁) zum Zeitpunkt t₁ vom zweiten beheizbaren Widerstandsthermometer bereitgestellt wird und/oder dass der Messwert der Temperatur des Messmediums T_{Medium;ist}(t₂) zum Zeitpunkt t₂ vom ersten beheizbaren Widerstandsthermometer bereitgestellt wird.

4. Verfahren nach Anspruch 1 oder 2,
**dadurch gekennzeichnet,**
**dass** der Messwert der Temperatur des Messmediums T_{Medium;ist}(t) zu den Zeitpunkten t von einem separaten Temperatursensor bereitgestellt werden.

5. Verfahren nach einem der Ansprüche 1 bis 3,
**dadurch gekennzeichnet,**
**dass** gilt: t₁ ≠ t₂.

6. Verfahren nach Anspruch 1, 2 oder 4,
**dadurch gekennzeichnet,**
**dass** gilt: t₁ = t₂.

7. Verfahren nach Anspruch 2,
**dadurch gekennzeichnet,**
**dass** der Grenzwert zwischen 25% und 75% liegt.

8. Verfahren nach einem der Ansprüche 1 bis 6,
**dadurch gekennzeichnet,**
**dass** die vom zweiten beheizbaren Widerstandsthermometer zum Zeitpunkt t₂ aufgenommene zweite Heizleistung P_{2.2}(t₂) festgelegt ist und/oder dass die am zweiten beheizbaren Widerstandsthermometer abgefallene Spannung festgelegt ist.

9. Thermisches Durchflussmessgerät (1) zur Bestimmung und/oder Überwachung des Durchflusses eines Messmediums durch ein Messrohr (21). mit einer Regel-/Auswerteeinheit, einem ersten Sensor (2) und zumindest einem zweiten Sensor (3), welche zumindest teilweise im Messrohr (21) angeordnet sind, wobei der erste Sensor (2) ein erstes beheizbares Widerstandsthermometer aufweist, und wobei der zweite Sensor (3) ein zweites beheizbares Widerstandsthermometer aufweist, und wobei das thermische Durchflussmessgerät (1) einen strömungsführenden Körper (12) aufweist, welcher im Messrohr (21) mit dem zweiten beheizbaren Widerstandsthermometer in einer Linie im Wesentlichen parallel zur Messrohrachse (15) angeordnet ist, wobei das erste beheizbare Widerstandsthermometer beabstandet zum zweiten Widerstandsthermometer im Messrohr angeordnet ist,
**dadurch gekennzeichnet,**
**dass** die Regel-/Auswerteeinheit und der zweite Sensor (3) so ausgestaltet sind, dass das zweite Widerstandsthermometer zu einem bestimmten Zeitpunkt eine festgelegte Heizleistung aufnimmt und/oder dass am zweiten Widerstandsthermometer zu einem bestimmten Zeitpunkt eine festgelegte Spannung abfällt, und
**dass** die Regel-/Auswerteeinheit zur Durchführung des Verfahrens nach einem der Ansprüche 1 bis 8 eingerichtet ist.

10. Thermisches Durchflussmessgerät nach Anspruch 9,
**dadurch gekennzeichnet,**
**dass** der strömungsführende Körper eine Platte (12) ist.

11. Thermisches Durchflussmessgerät nach Anspruch 9 oder 10,
**dadurch gekennzeichnet,**
**dass** das thermische Durchflussmessgerät (1) einen dritten Sensor (4) zur Bestimmung der Temperatur des Messmediums aufweist.

12. Thermisches Durchflussmessgerät nach Anspruch 11,
**dadurch gekennzeichnet,**
**dass** das erste Widerstandsthermometer in einer ersten stiftförmigen Hülse (8) angeordnet ist und dass das zweite Widerstandsthermometer in einer zweiten stiftförmigen Hülse (9) angeordnet ist, und dass der dritte Sensor (4) ein drittes Widerstandsthermometer in einer dritten stiftförmigen Hülse (10) aufweist, wobei die erste stiftförmige Hülse (8) und die zweite stiftförmige Hülse (9) und die dritte stiftförmige Hülse (10) parallel zueinander und/oder parallel zur Hochachse (19) des strömungsführenden Körpers (12) im Messrohr (21) angeordnet sind.

13. Thermisches Durchflussmessgerät nach Anspruch 11 oder 12,
**dadurch gekennzeichnet,**
**dass** der dritte Sensor (4) eine Längsachse (20) des strömungsführenden Körpers (12) schneidet.

14. Thermisches Durchflussmessgerät nach einem der Ansprüche 11 bis 13,
**dadurch gekennzeichnet,**
**dass** der dritte Sensor (4) einen Abstand zum strömungsführenden Körper (12) vom einfachen bis dreifachen des Durchmessers der dritten Hülse (10) aufweist und/oder dass der erste Sensor (2) einen Abstand parallel zur Längsachse (20) des strömungsführenden Körpers (12) zum strömungsführenden Körper (12) vom einfachen bis dreifachen des Durchmessers der ersten Hülse (8) aufweist.

## Claims

1. Procedure designed to measure the flow and the flow direction of a medium in a measuring tube, with a thermal flowmeter (1) designed to determine and/or monitor the flow of a medium through a measuring tube (21) with a control/evaluation unit, a first sensor (2) and at least a second sensor (3), which are at least partially arranged in the measuring tube (21),
wherein the first sensor (2) has a first heatable resistance thermometer, and wherein the second sensor (3) has a second heatable resistance thermometer, and wherein the thermal flowmeter (1) has a body (12) which guides the flow and which is arranged in the measuring tube (21) with the second heatable resistance thermometer in a line that is essentially parallel to the measuring tube axis (15), wherein the first heatable resistance thermometer is arranged at a distance from the second resistance thermometer in the measuring tube,
**characterized in that**
the control/evaluation unit and the second sensor (3) are designed in such a way that, at a certain point in time, the second resistance thermometer absorbs a defined heating capacity and/or **in that** a defined voltage drops at the second resistance thermometer at a certain point in time,
wherein the measured values T_{medium,actual} (t) representing the temperature of the medium are measured at the times t=t₀, t₁, t₂, t₃, ... tₙ,
wherein a first heating capacity P_{1.1}(t₁) is absorbed by the first heatable resistance thermometer at time t₁,
wherein a second heating capacity P_{2.2}(t₂) is absorbed by the second heatable resistance thermometer at time t₂,
wherein the first heatable resistance thermometer makes available a first measured value for the temperature T_{1,heated,actual} (t₁) at the time t₁ and **in that** a first coefficient PC₁(t₁) representing the flow of medium through the measuring tube is calculated as a function of the heating capacity P_{1.1}(t₁) absorbed by the first resistance thermometer, the temperature of the medium T_{medium, actual} (t₁) and the temperature of the first heatable resistance thermometer T_{1,heated, actual} (t₁), wherein the second heatable resistance thermometer makes available a second measured value for the temperature T_{2,heated,actual} (t₂) at the time t₂, and **in that** a second coefficient PC₂(t₂) is calculated as a function of the heating capacity P_{2.2}(t₂) absorbed by the second resistance thermometer, the temperature of the medium T_{medium,actual} (t₂) and the temperature of the second heatable resistance thermometer T_{2,heated,actual} (t₂),
and wherein a decision coefficient is calculated as a function of the first coefficient PC₁(t₁) and of the second coefficient PC₂(t₂),
wherein the value of the decision coefficient indicates a flow of the medium in the measuring tube in a first flow direction if the value of the decision coefficient is above a predefined limit value and wherein the value of the decision coefficient indicates a flow of the medium in the measuring tube in a second flow direction if the value of the decision coefficient is below the predefined limit value, wherein the second flow direction points in the direction opposite to the first flow direction.

2. Procedure as claimed in Claim 1,
**characterized in that**
the first coefficient PC₁(t₁) representing the flow of the medium through the measuring tube is calculated at time (t₁) according to the formula PC₁(t₁) = PC₁(t₁) / T_{1,heated,actual} (t=t₁)-T_{medium,actual} (t=t₁),
and **in that** the coefficient PC₂(t₂) representing the flow of the medium through the measuring tube is calculated at time (t₂) according to the formula PC₂(t₂) = PC₂(t₂) / T_{2,heated,actual} (t=t₂)-T_{medium,actual} (t=t₂),
and wherein the decision coefficient is calculated according to the formula DC = (PC₁-PC₂) / PC₁.

3. Procedure as claimed in Claim 1 or 2,
**characterized in that**
the measured value for the temperature of the medium T_{medium; actual} (t₁) is provided at time t₁ by the second heatable resistance thermometer and/or **in that** the measured value for the temperature of the medium T_{medium; actual} (t₂) is provided at time t₂ by the first heatable resistance thermometer.

4. Procedure as claimed in Claim 1 or 2,
**characterized in that**
the measured value for the temperature of the medium T_{medium; actual} (t) is provided at times t by a separate temperature sensor.

5. Procedure as claimed in one of the Claims 1 to 3,
**characterized in that**
the following applies : t₁ ≠ t₂.

6. Procedure as claimed in Claims 1, 2 or 4,
**characterized in that**
the following applies: t₁ = t₂.

7. Procedure as claimed in Claim 2,
**characterized in that**
the limit value is between 25% and 75%.

8. Procedure as claimed in one of the Claims 1 to 6,
**characterized in that**
the second heating capacity P_{2.2}(t₂) absorbed at time t₂ by the second heatable resistance thermometer is defined and/or **in that** the voltage falling at the second heatable resistance thermometer is defined.

9. Thermal flowmeter (1) for determining and/or monitoring the flow of a medium through a measuring tube (21), with a control/evaluation unit, a first sensor (2) and at least a second sensor (3), which are at least partially arranged in the measuring tube (21),
wherein the first sensor (2) has a first heatable resistance thermometer, and wherein the second sensor (3) has a second heatable resistance thermometer, and wherein the thermal flowmeter (1) has a body (12) which guides the flow and which is arranged in the measuring tube (21) with the second heatable resistance thermometer in a line that is essentially parallel to the measuring tube axis (15), wherein the first heatable resistance thermometer is arranged at a distance from the second resistance thermometer in the measuring tube,
**characterized in that**
the control/evaluation unit and the second sensor (3) are designed in such a way that, at a certain point in time, the second resistance thermometer absorbs a defined heating capacity and/or **in that** a defined voltage drops at the second resistance thermometer at a certain point in time, and
**in that** the control/evaluation unit is configured to carry out the procedure as claimed in Claims 1 to 8.

10. Thermal flowmeter as claimed in Claim 9,
**characterized in that**
the body that guides the flow is a plate (12).

11. Thermal flowmeter as claimed in Claim 9 or 10,
**characterized in that**
the thermal flowmeter (1) has a third sensor (4) for determining the temperature of the medium.

12. Thermal flowmeter as claimed in Claim 11,
**characterized in that**
the first resistance thermometer is arranged in a first pin-like sleeve (8), and **in that** the second resistance thermometer is arranged in a second pin-like sleeve (9), and **in that** the third sensor (4) has a third resistance thermometer in a third pin-like sleeve (10), wherein the first pin-like sleeve (8) and the second pin-like sleeve (9) and the third pin-like sleeve (10) are arranged parallel to one another and/or parallel to the vertical axis (19) of the body that guides the flow (12) in the measuring tube (21).

13. Thermal flowmeter as claimed in Claim 11 or 12,
**characterized in that**
the third sensor (4) cuts a longitudinal axis (20) of the body that guides the flow (12).

14. Thermal flowmeter as claimed in one of the Claims 11 to 13,
**characterized in that**
the third sensor (4) is at a distance from the body (12) that guides the flow, said distance being one to three times the diameter of the third sleeve (10) and/or **in that** the first sensor (2) is at a distance parallel to the longitudinal axis (20) of the body (12) that guides the flow, said distance being one to three times the diameter of the first sleeve (8).

## Revendications

1. Procédé destiné à la mesure du débit et du sens d'écoulement d'un produit dans un tube de mesure, avec un débitmètre thermique (1) destiné à la détermination et/ou la surveillance du débit d'un produit s'écoulant à travers un tube de mesure (21), avec une unité de régulation / d'exploitation, un premier capteur (2) et au moins un deuxième capteur (3), lesquels sont disposés au moins partiellement dans le tube de mesure (21),
le premier capteur (2) comportant un premier thermomètre à résistance chauffant, et le deuxième capteur (3) comportant un deuxième thermomètre à résistance chauffant, et le débitmètre thermique (1) présentant un corps guidant l'écoulement (12), lequel corps est disposé dans le tube de mesure (21), dans une ligne avec le deuxième thermomètre à résistance chauffant, pour l'essentiel parallèlement à l'axe de tube de mesure (15), le premier thermomètre à résistance chauffant étant disposé à distance du deuxième thermomètre à résistance chauffant dans le tube de mesure,
**caractérisé**
**en ce que** l'unité de régulation / d'exploitation et le deuxième capteur (3) sont conçus de telle sorte que le deuxième thermomètre à résistance chauffant absorbe une puissance de chauffage définie à un instant déterminé et/ou en ce qu'une tension définie chute aux bornes du deuxième thermomètre à résistance chauffant à un instant déterminé,
les valeurs T_{produit,réelle}(t) représentant la température du produit étant mesurées aux instants t=t₀, t₁, t₂, t₃, ... tₙ,
une première puissance de chauffage P_{1.1}(t₁) étant absorbée à l'instant t₁ par le premier thermomètre à résistance chauffant,
une deuxième puissance de chauffage P_{2.2}(t₂) étant absorbée à l'instant t₂ par le deuxième thermomètre à résistance chauffant,
le premier thermomètre à résistance chauffant mettant à disposition, à l'instant t₁, une première valeur mesurée de la température T_{1,chauffant,réelle}(t₁) et en ce qu'un premier coefficient PC₁(t₁) représentant le débit de produit à travers le tube de mesure est calculé en fonction de la première puissance de chauffage P_{1.1}(t₁) absorbée par le premier thermomètre à résistance, de la température du produit T_{produit,réelle}(t₁) et de la température du premier thermomètre à résistance chauffant T_{1,chauffant,réelle}(t₁),
le deuxième thermomètre à résistance chauffant mettant à disposition, à l'instant t2, une deuxième valeur mesure de la température T_{2,chauffant,réelle}(t₂) et en ce qu'un deuxième coefficient PC₂(t₂) représentant le débit de produit à travers le tube de mesure est calculé en fonction de la deuxième puissance de chauffage P_{2.2}(t₂) absorbée par le deuxième thermomètre à résistance, de la température du produit T_{produit,réelle}(t₂) et de la température du deuxième thermomètre à résistance Chauffant T_{2,chauffant,réelle}(t₂),
et un coefficient de décision étant calculé en fonction du premier coefficient PC₁(t₁) et du deuxième coefficient PC₂(t₂),
la valeur du coefficient de décision indiquant un écoulement du produit dans le tube de mesure dans une première direction d'écoulement lorsque la valeur du coefficient de décision est supérieure à un seuil prédéfini et la valeur du coefficient de décision indiquant un écoulement du produit dans le tube de mesure dans une deuxième direction d'écoulement lorsque la valeur du coefficient de décision est inférieure au seuil prédéfini, la deuxième direction d'écoulement étant orientée à l'opposé de la première direction d'écoulement.

2. Procédé selon la revendication 1,
**caractérisé**
**en ce que** le premier coefficient PC₁(t₁) représentant le débit de produit à travers le tube de mesure est calculé à l'instant (t₁) d'après la formule PC₁(t₁) = PC₁(t₁) / T_{1,chauffant,réelle}(t=t₁)-T_{produit,réelle}(t=t₁),
et **en ce que** le deuxième coefficient PC₂(t₂) représentant le débit de produit à travers le tube de mesure est calculé à l'instant (t₂) d'après la formule PC₂(t₂) = PC₂(t₂) / T_{2,chauffant,réelle}(t=t₂)-T_{produit,réelle}(t=t₂),
et **en ce que** le coefficient de décision et calculé d'après la formule DC = (PC₁-PC₂) / PC₁.

3. Procédé selon la revendication 1 ou 2,
**caractérisé**
**en ce que** la valeur mesurée de la température du produit T_{Produit;réelle}(t₁) est mise à disposition à l'instant t₁ par le deuxième thermomètre à résistance chauffant et/ou en ce que la valeur mesurée de la température du produit T_{Produit;réelle}(t₂) est mise à disposition à l'instant t₂ par le premier thermomètre à résistance chauffant.

4. Procédé selon la revendication 1 ou 2,
**caractérisé**
**en ce que** la valeur mesurée de la température du produit T_{Produit;réelle}(t) est mise à disposition aux instants t par un capteur de température séparé.

5. Procédé selon l'une des revendications 1 à 3,
**caractérisé**
**en ce que** la règle suivante s'applique : t₁ ≠ t₂.

6. Procédé selon la revendication 1, 2 ou 4,
**caractérisé**
**en ce que** la règle suivante s'applique : t₁ = t₂.

7. Procédé selon la revendication 2,
**caractérisé**
**en ce que** le seuil se situe entre 25 % et 75 %.

8. Procédé selon l'une des revendications 1 à 6,
**caractérisé**
**en ce que** la deuxième puissance de chauffage P_{2.2}(t₂) absorbée à l'instant t₂ par le deuxième thermomètre à résistance chauffant est déterminée et/ou en ce que la chute de tension aux bornes du deuxième thermomètre à résistance chauffant est déterminée.

9. Débitmètre thermique (1) destiné à la détermination et/ou la surveillance du débit d'un produit s'écoulant dans un tube de mesure (21), avec une unité de régulation / d'exploitation, un premier capteur (2) et au moins un deuxième capteur (3), lesquels sont disposés au moins partiellement dans le tube de mesure (21),
le premier capteur (2) comportant un premier thermomètre à résistance chauffant, et le deuxième capteur (3) comportant un deuxième thermomètre à résistance chauffant, et le débitmètre thermique (1) présentant un corps guidant l'écoulement (12), lequel corps est disposé dans le tube de mesure (21), dans une ligne avec le deuxième thermomètre à résistance chauffant, pour l'essentiel parallèlement à l'axe de tube de mesure (15), le premier thermomètre à résistance chauffant étant disposé à distance du deuxième thermomètre à résistance chauffant dans le tube de mesure,
**caractérisé**
**en ce que** l'unité de régulation / d'exploitation et le deuxième capteur (3) sont conçus de telle sorte que le deuxième thermomètre à résistance chauffant absorbe une puissance de chauffage définie à un instant déterminé et/ou en ce qu'une tension définie chute aux bornes du deuxième thermomètre à résistance chauffant à un instant déterminé, et
**en ce que** l'unité de régulation / d'exploitation est configurée selon l'une des revendications 1 à 8 en vue de la réalisation du procédé.

10. Débitmètre thermique selon la revendication 9,
**caractérisé**
**en ce que** le corps guidant l'écoulement est doté d'une plaque (12).

11. Débitmètre thermique selon la revendication 9 ou 10,
**caractérisé**
**en ce que** le débitmètre thermique (1) comporte un troisième capteur (4) destiné à la détermination de la température du produit.

12. Débitmètre thermique selon la revendication 11,
**caractérisé**
**en ce que** le premier thermomètre à résistance est disposé dans une douille en forme de tige (8), et en ce que le deuxième thermomètre à résistance est disposé dans une deuxième douille en forme de tige (9), et en ce que le troisième capteur (4) comporte un troisième thermomètre à résistance dans une troisième douille en forme de tige (10), la première douille en forme de tige (8) et la deuxième douille en forme de tige (9) et la troisième douille en forme de tige (10) étant disposées parallèlement les unes aux autres et/ou parallèlement à l'axe vertical (19) du corps guidant l'écoulement (12) dans le tube de mesure (21).

13. Débitmètre thermique selon la revendication 11 ou 12,
**caractérisé**
**en ce que** le troisième capteur (4) coupe un axe longitudinal (20) du corps guidant l'écoulement (12).

14. Débitmètre thermique selon l'une des revendications 11 à 13,
**caractérisé**
**en ce que** le troisième capteur (4) présente une distance par rapport au corps guidant l'écoulement (12) du simple au triple du diamètre de la troisième douille (10) et/ou en ce que le premier capteur (2) présente une distance parallèle à l'axe longitudinal (20) du corps guidant l'écoulement (12) du simple au triple du diamètre de la première douille (8).
